# EUROPÄISCHE PATENTSCHRIFT

(11) **EP 0 959 053 B1**
(45) Veröffentlichungstag und Bekanntmachung des Hinweises auf die Patenterteilung: **10.04.2002**
(21) Anmeldenummer: 99109167.9
(22) Anmeldetag: 10.05.1999
(51) Int. Cl.: C04B 28/04, C09K 17/10

(54) **Bindemittel zur Schadstoffbindung in kontaminierten Bodenbereichen und/oder zur Bodenstabilisierung**
Binder for binding pollutants in contaminated soils and/or for soil stabilisation
Liant pour l'immobilisation de polluants dans les sols contaminés et/ou pour la stabilisation du sol

(30) Priorität: 19.05.1998 AT 85098
(43) Veröffentlichungstag der Anmeldung: 24.11.1999
(73) Patentinhaber: SPZ Zementwerk Eiberg Gmbh & Co KG, 6330 Kufstein (AT)
(72) Erfinder: Koubowetz, Franz, 6330 Schwoich (AT)
(74) Vertreter: Torggler, Paul Norbert, Dr.

(56) Entgegenhaltungen:
- EP-A- 0 157 749
- EP-A- 0 361 614
- EP-A- 0 567 025
- WO-A-96/29119
- DE-A- 19 641 308
- DE-C- 3 701 717
- US-A- 5 133 806
- US-A- 5 735 947
- DATABASE WPI Section Ch, Week 8612 Derwent Publications Ltd., London, GB; Class L02, AN 86-078261 XP002112965 & JP 61 026690 A (NIPPON CEMENT KK), 5. Februar 1986 (1986-02-05)

## Beschreibung

Die Erfindung bezieht sich auf ein Bindemittel zur Schadstoffbindung in kontaminierten Bodenbereichen und/oder zur Bodenstabilisierung.

Immer häufiger trifft man heutzutage Bodenmaterialien an, die Kontaminationen verschiedener Art und Stärke zeigen. Dies ist insbesondere bei der Erneuerung von Straßen, Autobahnen und Eisenbahnanlagen der Fall, die aus einer Zeit stammen, in der man dem Umweltschutz noch nicht den Stellenwert einräumte (oder einräumen konnte), den er heute hat, oder in der man die gegebenen Gefahren noch gar nicht kannte. Letzteres war z.B. bei teergebundenen Schichten der Fall. Heute weiß man, daß im Teer Schadstoffe (Phenole und polyzyklische aromatische Kohlenwasserstoffe) enthalten sind, die nicht in das Grundwasser gelangen sollten.

Eine gewisse Schadstoffbindung tritt auch durch Normalzement auf, der als Bindemittel z.B. bei hydraulisch gebundenen Tragschichten verwendet wird, die wegen der vorwiegenden Verwendung von Zement auch als zementstabilisierte Tragschichten bezeichnet werden. Solche zementgebundene Tragschichten sind bekannt und finden im Straßenbau, aber auch im Eisenbahnbau sowie im Hoch- und Industriebau gleichsam als "Allwetter-Bauplattform" Anwendung. Bei Straßen liegen diese Tragschichten im allgemeinen auf der Frostschutzschicht und unter der Deckschicht. Wo der Untergrund für den Baustellenverkehr nicht oder nach Regen länger nicht ausreichend tragfähig ist, mischt man Bindemittel in den anstehenden Boden selbst ein und "stabilisiert" so die durch die anschließende Verdichtung erreichte Tragfähigkeit gegenüber Einwirkung von Wasser und Frost.

Eine Schadstoffbindung durch Normalzement funktioniert z.B. bei Schwermetallen wie Quecksilber und Blei relativ gut, weil der Zement diese Stoffe beim Erhärten chemisch einbindet. Organische, insbesondere flüchtige Stoffe können hingegen nicht chemisch gebunden, sondern nur physikalisch immobilisiert werden. Die höhere Dichte der Zementstabilisierung hilft, reicht aber bei stärkeren Kontaminationen allein nicht aus, weil eine hohe Porosität durch Grobporen erhalten bleibt.

Baustoffmischungen zur Einbindung Schadstoffbelasteter Böden sind aus DE 3 701 717 und EP A 567025 bekannt.

Aufgabe der Erfindung ist es, ein Bindemittel zur Schadstoffbindung und/oder Bodenstabilisierung zu schaffen, welches sich insbesondere auch für den Fall eignet, daß das zu behandelnde Bodenmaterial mit organischen Schadstoffen der Kohlenstoffchemie kontaminiert ist. Das ist vor allem bei Autobahnen bzw. sonstigen Straßen, Eisenbahnanlagen oder allgemein bei Grundstücken der Fall, die in irgendeiner Weise mit schädlichen chemischen Produkten in Berührung gekommen sind. Weiters soll das Bindemittel vorzugsweise auch zur Bodenstabilisierung geeignet sein, um Arbeitsplattformen, hydraulisch gebundene Tragschichten u.dgl. herzustellen.

Die Lösung der Aufgabe besteht erfindungsgemäß darin, daß das Bindemittel als mengenmäßige Hauptbestandteile einen jeweils quantitativ etwa gleichen Anteil an Portlandzementklinker, puzzolanischen Stoffen und latenthydraulischen Stoffen, sowie einen relativ zum Ausmaß der jeweiligen Anteile dieser Stoffe quantitativ geringeren Anteil eines inerten Stoffes enthält.

Der Portlandzementklinker sorgt für die nötige Festigkeit und dient zudem als Anregemittel für die Erhärtung der latenthydrauschen und puzzolanischen Stoffe. Die latenthydraulischen Stoffe, z.B. Hüttensand, verbessern die Zementsteindichte und damit die Immobilisierung der Schadstoffe. Auch die puzzolanischen Stoffe, z.B. Flugasche, sorgen für ein dichtes Gefüge. Der vorzugsweise Zusatz von Aktivkohle oder ähnlich wie Aktivkohle wirkenden Adsorbentien in geringen Mengen zu den puzzolanischen Stoffen ergibt ein gegebenenfalls erforderliches zusätzliches Bindevermögen für die organischen Schadstoffe. Außerdem verlangsamen die latenthydraulischen und puzzolanischen Stoffe die Erhärtung des Portlandzementklinkers, wodurch schädliche Rißbildungen vermieden werden können. Die inerten Stoffe, z.B. gemahlener Kalkstein, füllen Lücken in der Kornverteilung. Die schadstoffbindende Wirkung und der Effekt der Bodenstabilisierung wird durch die erfindungsgemäßen Mengenverhältnisse optimiert.

Das Ausmaß der etwa gleichen Anteile von Portlandzementklinker, latenthydraulischen Stoffen und puzzolanischem Stoff kann je nach Anwendungsfall und Bodenbeschaffenheit etwas variieren. Zusammen bilden aber die drei genannten Stoffe die Hauptmasse des Bindemittels (über 50%, vorzugsweise von etwa 75 bis etwa 90 Masse%). Wenn von quantitativ "etwa gleichen" Anteilen von Portlandzementklinker, puzzolanischem Stoff und latenthydraulischem Stoff die Rede ist, dann ist damit gemeint, daß je nach Anwendungsfall allfällige Unterschiede zwischen den Anteilen der genannten Stoffe vorhanden sein und durchaus z.B.bis zu 10 Prozentpunkten betragen können.

Im Hinblick auf die angestrebte Schadstoffbindung ist es zweckmäßig, wenn die Anteile von Portlandzementklinker, puzzolanischem Stoff und latenthydraulischem Stoff jeweils zwischen 25 bis 30 Masse% liegen, wobei die obere Grenze des Anteils des einen oder anderen dieser drei Stoffe vorzugsweise 35 Masse% nicht überschreiten und 20 Masse% nicht unterschreiten sollte. Der Anteil des inerten Stoffes kann vorzugsweise zwischen 10 und 15 Masse% betragen.

Zusätzlich zu den genannten Stoffkomponenten kann das erfindungsgemäße Bindemittel in geringer Menge auch mineralische Korrektiva (z.B. ca. 1 - 2 Masse%) mit hohem adsorptiven Bindevermögen, z.B. Mergel, zur Verbesserung der Verarbeitbarkeit, speziell der plastischen Fließeigenschaften, und/oder Abbinderegler wie Gips oder Anhydrit (z.B. ca. 1-3 Masse%) enthalten.

Die beschriebenen quantitativen Angaben über das erfindungsgemäße Bindemittel beziehen sich auf die Trockensubstanz. Ausgehärtet wird das Bindemittel unter Beigabe von Wasser. Die Aufbereitung des zu behandelnden Bodenmaterials sowie die Zugabe von Bindemittel und Wasser kann wie bei der bekannten Zementstabilisierung erfolgen. Dabei wird das Bindemittel auf der zu behandelnden Fläche verteilt und mit einer Bodenfräse in das Bodenmaterial eingefräst (in Situ Technik). Die Wasserzufuhr erfolgt durch Besprengung. Nach Abschluß der Verdichtung kann auch noch zum Schutz gegen zu starke Austrocknung eine Nachbehandlung durch Aufsprühen einer Bitumenemulsion durchgeführt werden. Man kann aber auch auf andere Weise eine Vermischung des zu behandelnden Bodenmaterials mit dem Bindemittel und Wasser herbeiführen, für Sonderfälle z.B. in einer stationären Mischanlage an Ort und Stelle oder in angemessener Entfernung.

Es hat sich herausgestellt, daß es mit dem erfindungsgemäßen Bindemittel möglich ist, extrem starke Kontaminationen, etwa Überschreitungen der Eluatklasse IV - nach ÖNORM S2072 - um das Zehnfache des Grenzwertes derart zu behandeln, daß das Ergebnis der Klasse I (Trinkwasser) entspricht. Es ist daher ein kostenintensiver Abtransport und/oder eine Entsorgung des kontaminierten Bodenmaterials entbehrlich, wenn es mit dem erfindungsgemäßen Bindemittel behandelt wird.

Die erfindungsgemäße Bindemittelmischung ist so optimiert, daß außer einer hohen Schadstoffbindung auch eine gute, z.B. für einen Baustellenverkehr geeignete (und gegebenenfalls vorgeschriebene) Festigkeit der mit dem Bindemittel behandelten Bodenschicht ermöglicht wird. Daneben wäre auch noch die gute Erhärtung hervorzuheben, sodaß z.B. der Baustellenverkehr schon nach etwa drei Tagen die stabilisierte Fläche beanspruchen kann.

### Beispiel:

### (alle Angaben in Masse%)

a) Zusammensetzung des Bindemittels (Trockensubstanz)

| | |
|---|---|
| 25-28% | gemahlener Portlandzementklinker |
| 1-2% | Mineralische Korrektiva (z.B. Mergel) |
| 1-3% | Abbinderegler: Mischung aus CaSO₄·2H₂O und CaSO₄ |
| 26-30% | gemahlener Hüttensand (latenthydraulischer Stoff) |
| 26-30% | gemahlene Flugasche (puzzolanischer Stoff) vorbehandelt mit adsorbierenden Bestandteilen (z.B. Aktivkohle) |
| 13-15% | gemahlener Kalkstein mit abgestimmter Kornverteilung (inerter Stoff) |
| 1% | pulverförmige Kieselsäure |

b) Kornverteilung - Feinheit des Bindemittels (Trockensubstanz)
Die Feinheit von des Bindemittels liegt über 4000 cm²/g (nach Blaine).
Der Komanteil unter 5 µm ist größer als 3%;
der Komanteil unter 200 µm ist größer als 98%.
c) Mischungsverhältnis Bindemittel / Bodenmaterial
5-15% Bindemittel (Trockensubstanz), bezogen auf die Masse des zu behandelnden Bodenmaterials, z.B. von Straßenbaualtmaterial (Frostschutzmaterial + teergebundenes Material + Betonbrechsand), je nach Kontaminierungsgrad.

## Patentansprüche

1. Bindemittel zur Schadstoffbindung in kontaminierten Bodenbereichen und/oder zur Bodenstabilisierung, **dadurch gekennzeichnet, daß** das Bindemittel als mengenmäßige Hauptbestandteile einen jeweils quantitativ etwa gleichen Anteil an Portlandzementklinker, puzzolanischen Stoffen und latenthydraulischen Stoffen, sowie einen relativ zum Ausmaß der jeweiligen Anteile dieser Stoffe quantitativ geringeren Anteil eines inerten Stoffes enthält.

2. Bindemittel nach Anspruch 1, **dadurch gekennzeichnet, daß** die Anteile von Portlandzementklinker, puzzolanischem Stoff und latenthydraulischem Stoff jeweils zwischen 25 bis 30 Masse% liegen.

3. Bindemittel nach Anspruch 1 oder 2, **dadurch gekennzeichnet, daß** der Anteil des inerten Stoffes bei 10 bis 15 Masse% beträgt.

4. Bindemittel nach einem der Ansprüche 1 bis 3, **dadurch gekennzeichnet, daß** der puzzolanische Stoff aus gemahlener Flugasche besteht.

5. Bindemittel nach einem der Ansprüche 1 bis 4, **dadurch gekennzeichnet, daß** der latenthydraulische Stoff aus gemahlenem Hüttensand besteht.

6. Bindemittel nach einem der Ansprüche 1 bis 5, **dadurch gekennzeichnet, daß** der inerte Stoff aus gemahlenem Kalkstein besteht.

7. Bindemittel nach einem der Ansprüche 1 bis 6, **dadurch gekennzeichnet, daß** es Aktivkohle oder ähnlich wie Aktivkohle wirkende Adsorbentien enthält, mit denen vorzugsweise die puzzolanischen Stoffe vorbehandelt sind.

8. Bindemittel nach einem der Ansprüche 1 bis 7, **gekennzeichnet durch** folgende Kornverteilung und Feinheit:
Feinheit über 4000 cm²/g (nach Blaine)
Kornanteil unter 5 µm ist größer als 3 %
Kornanteil unter 200 µm ist größer als 98%.

9. Verwendung eines Bindemittels, dessen Trockensubstanz als mengenmäßige Hauptbestandteile einen jeweils quantitativ etwa gleichen Anteil an Portlandzementklinker, puzzolanischen Stoffen und latenthydraulischen Stoffen, sowie einen relativ zum Ausmaß der jeweiligen Anteile dieser Stoffe quantitativ geringeren Anteil eines inerten Stoffes enthält, zur Schadstoffbindung in kontaminierten Bodenbereichen und/oder zur Bodenstabilisierung.

## Claims

1. A binding agent for pollutant binding in contaminated ground regions and/or for ground stabilisation **characterised in that** the binding agent as quantitative main constituents contains a respectively quantitatively approximately equal proportion of Portland cement clinker, pozzolanic substances and latent-hydraulic substances, and a proportion of an inert substance, which proportion is quantitatively smaller relative to the amount of the respective proportions of said substances.

2. A binding agent according to claim 1 **characterised in that** the proportions of Portland cement clinker, pozzolanic substance and latent-hydraulic substance are respectively between 25 and 30% by mass.

3. A binding agent according to claim 1 or claim 2 **characterised in that** the proportion of the inert substance is from 10 to 15% by mass.

4. A binding agent according to one of claims 1 to 3 **characterised in that** the pozzolanic substance comprises ground fly ash.

5. A binding agent according to one of claims 1 to 4 **characterised in that** the latent-hydraulic substance comprises ground foundry sand.

6. A binding agent according to one of claims 1 to 5 **characterised in that** the inert substance comprises ground limestone.

7. A binding agent according to one of claims 1 to 8 **characterised in that** it contains activated carbon or adsorbents which act similarly to activated carbon and with which preferably the pozzolanic substances are pre-treated.

8. A binding agent according to one of claims 1 to 7 **characterised by** the following grain distribution and fineness:
fineness over 4000 cm²/g (in accordance with Blaine),
grain proportion below 5 µm is greater than 3%, and
grain proportion below 200 µm is greater than 98%.

9. Use of a binding agent whose dry substance as quantitative main constituents contains a respectively quantitatively approximately equal proportion of Portland cement clinker, pozzolanic substances and latent-hydraulic substances, and a proportion of an inert substance, which proportion is quantitatively smaller relative to the amount of the respective proportions of said substances, for pollutant binding in contaminated ground regions and/or for ground stabilisation.

## Revendications

1. Liant pour la fixation de polluants dans des zones de sol contaminées et/ou pour la stabilisation des sols, **caractérisé en ce que** le liant contient respectivement comme composants principaux, en termes de quantités, une proportion à peu près égale quantitativement de clinker de ciment portland, de matières pouzzolaniques et des matières à hydraulicité latente, ainsi qu'une proportion d'une matière inerte quantitativement plus faible par rapport à la valeur des différentes proportions de ces matières.

2. Liant selon la revendication 1, **caractérisé en ce que** les proportions du clinker de ciment portland, des matières pouzzolaniques et des matières à hydraulicité latente se situent respectivement entre 25 et 30 % en masse.

3. Liant selon la revendication 1 ou la revendication 2, **caractérisé en ce que** la proportion des matières inertes est de 10 à 15 % en masse.

4. Liant selon l'une des revendications 1 à 3, **caractérisé en ce que** la matière pouzzolanique se compose de cendre volante broyée.

5. Liant selon l'une des revendications 1 à 4, **caractérisé en ce que** la matière à hydraulicitè latente se compose de sable métallurgique.

6. Liant selon l'une des revendications 1 à 5, **caractérisé en ce que** la matière inerte se compose de pierre à chaux broyée.

7. Liant selon l'une des revendications 1 à 6, **caractérisé en ce qu'**il contient du charbon actif ou des adsorbants ayant une action similaire à celle du charbon actif avec lesquels les matières pouzzolaniques sont de préférence prétraitées.

8. Liant selon l'une des revendications 1 à 7, **caractérisé en ce qu'**il présente la distribution granulométrique et la finesse suivantes:
finesse supérieure à 4000 cm²/g (suivant Blaine);
la proportion de particules de taille inférieure à 5 µm est plus de 3 %;
la proportion de particules de taille supérieure à 200 µm est de plus de 98 %.

9. Utilisation d'un liant dont la substance sèche contient respectivement comme composants principaux, en termes de quantités, une proportion à peu près égale quantitativement de clinker de ciment portland, de matières pouzzolaniques et de matières à hydraulicité latente, ainsi qu'une proportion d'une matière inerte quantitativement plus faible par rapport à la valeur des différentes proportions de ces matières, pour la fixation de polluants dans des zones de sol contaminées et/ou pour la stabilisation des sols.
